# EUROPÄISCHE PATENTSCHRIFT

(11) **EP 3 154 874 B1**
(45) Veröffentlichungstag und Bekanntmachung des Hinweises auf die Patenterteilung: **15.08.2018**
(21) Anmeldenummer: 15729139.4
(22) Anmeldetag: 11.06.2015
(51) Int. Cl.: B65D 85/804

(54) **PORTIONSKAPSEL MIT EINEM KALANDRIERTEN FASERARTIGEM MATERIAL**
SINGLE SERVE CAPSULE WITH A CALENDERED FIBROUS MATERIAL
DOSETTE COMPRENANT UN MATÉRIAU FIBREUX CALANDRÉ

(30) Priorität: 12.06.2014 DE 102014108260; 15.12.2014 DE 102014118585
(43) Veröffentlichungstag der Anmeldung: 19.04.2017
(73) Patentinhaber: K-fee System GmbH, 51469 Bergisch Gladbach (DE)
(72) Erfinder: EMPL, Günter, 51429 Bergisch Gladbach (DE); HANISCH, Marco, 51491 Overath (DE)
(74) Vertreter: Wolff, Felix
(86) Internationale Anmeldenummer: PCT/EP2015/063023
(87) Internationale Veröffentlichungsnummer: WO 2015/189317

(56) Entgegenhaltungen:
- EP-A1- 2 218 653
- WO-A1-2004/082390
- WO-A1-2012/007257
- WO-A1-2012/038063
- WO-A2-2014/006048
- DE-A1-102011 115 833
- DE-A1-102012 105 282
- US-A1- 2008 085 356
- US-A1- 2009 324 788
- US-A1- 2012 070 543
- US-B1- 6 299 926

## Beschreibung

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften EP 1792850 B1, EP 1344722 A1, US 2003/0172813 A1 und WO 2012/038063 gattungsgemäße Portionskapseln zur Kaffee- und Espressozubereitung offenbart.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Filterelemente sind entweder aus einem thermoplastischen Kunststoff gespritzt oder aus einer Kunstofffolie tiefgezogen oder geprägt oder aus einem Vlies oder Filz hergestellt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffeepulver. Dieser Druck wirkt ferner auch auf das zwischen dem Kaffeepulver und dem Kapselboden und vor dem eingestochenen Kapselauslauf liegende Partikelsieb ein.

Nachteilig an den aus dem Stand der Technik bekannten Filterelementen ist entweder deren aufwändige Herstellung oder deren vergleichsweise geringe mechanische Stabilität.

Es war deshalb die Aufgabe der vorliegenden Erfindung, eine Portionskapsel mit einer Filteranordnung zur Verfügung zu stellen, welche im Vergleich zum Stand der Technik kostengünstiger zu fertigen ist und bei welcher gleichzeitig die im Zusammenhang mit dem Stand der Technik aufgezeigten Nachteile vermieden werden.

Gelöst wird diese Aufgabe mit einer Portionskapsel zur Herstellung eines Getränks aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist, wobei das Filterelement ein punkt- und/oder strukturkalandriertes aus Fasern hergestelltes Material aufweist.

Im Vergleich zum Stand der Technik hat die erfindungsgemäße Portionskapsel den Vorteil, dass ein einfaches und kostengünstiges Filterelement Verwendung findet, das eine hohe mechanische Stabilität aufweist, so dass es, selbst wenn es von einem Anstechmittel angestochen und/oder durchstochen wird, nicht weiterreist. Ein aufwändiger Kunststoffspritzvorgang oder ein Tiefzieh- bzw. Prägeverfahren zur Herstellung der Siebe ist somit einsparbar. Die Herstellungskosten werden somit erheblich gesenkt. Zudem wird keine Stützstruktur benötigt, kann aber vorhanden sein, da sich das Filterelement vorzugsweise unmittelbar am Kapselboden abstützt. Im Vergleich zu den aus dem Stand der Technik bekannten Kunststofffiltern hat ein Filterelement zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines aus Fasern hergestelltem Filterelement die Gefahr von Siebverstopfungen deutlich reduziert bzw. nahezu ausgeräumt ist. Überraschenderweise zeigt sich das Filterelement sowohl bei einer Getränkezubereitung mit einer unter vergleichsweise niedrigen Druck stehenden Zubereitungsflüssigkeit, als auch bei einer Getränkezubereitung mit einer unter vergleichsweise hohen Druck stehenden Zubereitungsflüssigkeit als verstopfungsresistent. Ferner wird zuverlässig stets einen Flüssigkeitsquerfluss im Filterelement zumindest Abschnittsweise aufrechterhalten und ein Abfluss der in das Filterelement eintretenden Flüssigkeiten zu einer Abflussöffnung gewährleistet.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelsubstrat, beispielsweise Kaffeepulver, Suppenpulver oder Tee, vor dem Extraktionsvorgang im Wesentlichen aromadicht gegenüber der Umwelt verschlossen ist. Der Tee kann als Pulver, Granulat, Feinschnitt und/oder ganze Blätter/Stengel vorliegen. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird und/oder eventuell vorhandene Öffnungen sind durch eine Folie überdeckt, die vor der Getränkeherstellung abgezogen oder durchstochen wird.

Ein aus Fasern hergestelltes Material ist jedes Material, das als Ausgangstoff Fasern aufweist. Diese Fasern können geordnet oder ungeordnet sein. Die Fasern können mechansich oder durch Stoffschluss miteinander verbunden sein. Beispielsweise können die Faser gesponnen oder durch Filzen miteinander verbunden werden. Vorzugsweise ist das Material, aus dem das Filterelement hergestellt wird demnach ein Filz und/oder ein Vlies.

Die Fasern können beispielsweise Kunstofffasern, Naturstofffasern, Papierfasern oder papierähnliche Fasern sein. Unterschiedliche Fasermaterialien können miteinander gemischt werden. Beispielsweise können Naturstofffasern, Papierfasern oder papierähnliche Fasern einen Kunststofffaseranteil aufweisen und umgekehrt.

Erfindungsgemäß ist das Fasermaterial punkt- und/oder strukturkalandriert. Punkt- und/oder strukturkalandriert im Sinne der Erfindung bedeutet, dass die Fasern zumindest an den Oberflächen des Vliesstoffes durch ein Thermokalandrierverfahren punktuell und/oder gemäß einer bestimmten Struktur, beispielsweise mit zwei sich insbesondere kreuzenden Linien, miteinander verbunden, insbesondere verschweißt werden. Dazu wird der Faserstoff beispielsweise durch beheizte Walzen geführt, wobei mindestens eine Walze Erhebungen besitzt. Zumindest an diesen Erhebungen verbinden sich/verschmelzen die Fasern untereinander. Dadurch weist das Fasermaterial eine hohe mechanische Stabilität auf. Eine Struktur ist beispielsweise eine oder mehrere Linien, die beispielsweise winklig, insbesondere rechtwinklig, oder parallel zueinander angeordnet sind. Eine Struktur kann aber auch ein Kreis oder eine sonstige geometrische Form sein. Vorzugsweise sind die Punkte oder Strukturen gemäß einem bestimmten wiederkehrenden Muster angeordnet, wobei die einzelnen Strukturen äquidistant zueinander vorgesehen sind. Ein Filterelement mit einer Verbindung der Schichten mit sich kreuzenden Linien wird einem Einstechdorn besonders viel Wiederstand gegen Zerreißen entgegengesetzt, insbesondere, wenn sich die Kreuzung der Linien im Einstechbereich eines Einstechdorns befindet.

Vorzugsweise weist das Fasermaterial eine Vielzahl von Einbuchtungen auf, die besonders bevorzugt in einem regelmäßigen Muster und/oder äquidistant vorgesehen sind.

Gemäß einer weiteren bevorzugten Ausführungsform der vorliegenden Erfindung ist vorgesehen, dass das Vlies einen aus Kunststofffasern, insbesondere Kunststofffeinfasern, beispielsweise Polyester-Feinfasern, hergestellten Vliestoff umfasst, welcher insbesondere ein Wirrfaser- und/oder faserorientierter-Vliestoff ist. Das Vlies umfasst bevorzugt eine Massenbelegung (auch als Grammatur oder Flächengewicht bezeichnet) zwischen 40 und 250 Gramm pro Quadratmeter, besonders bevorzugt zwischen 80 und 140 Gramm pro Quadratmeter, und ganz besonders bevorzugt zwischen 110 und 130 Gramm pro Quadratmeter. Das Filterelement bzw. das Vlies weist bevorzugt eine Dicke zwischen 0,2 und 2,0 Millimetern, besonders bevorzugt zwischen 0,3 und 0,6 Millimetern, und ganz besonders bevorzugt, von im Wesentlichen 0,32 Millimetern auf. Das Vlies ist derart ausgebildet, dass die Luftdurchlässigkeit des Vlieses bei 100 Pascal bevorzugt zwischen 100 und 3000 l/(m²s), besonders bevorzugt zwischen 1500 und 2500 l/(m²s) und ganz besonders bevorzugt, im Wesentlichen bei 2000 l/(m²s) liegt. Es hat sich in überraschender und nicht vorhersehbarer Weise gezeigt, dass mit derartigen Vliestoffen optimale Ergebnisse hinsichtlich Extraktionseffizienz, Durchmisch- und Abfließverhalten, sowie Verstopfungsresistenz zu erzielen sind und sich trotzdem die "Crema" bildet. Die Fasern können aus einer oder mehreren Subtanzen bestehen. Es kann sich um ein Fasergemisch handeln. Vorzugsweise sind die Fasern aus Polyester vorgesehen.

Gemäß einer weiteren Ausführungsform der vorliegenden Erfindung weist das Filterelement eine Filzstruktur auf. Insbesondere handelt es sich dabei um eine Nadelfilzstruktur. Vorzugsweise besteht das Filterelement aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur, besonders bevorzugt aber nur über nur über einen Teilbereich der Höhe. Vorzugsweise ist die Filzstruktur form- kraft und/oder stoffschlüssig mit der Trägerstruktur verbunden. Vorzugsweise weist das Filterelement zwei oder mehr Filzstrukturen auf, die durch die Trägerstruktur vorzugsweise voneinander getrennt sind oder innerhalb der Trägerstruktur aneinanderstoßen. Die Dicke der beiden Filzstrukturen kann gleich oder unterschiedlich sein. Vorzugsweise ist eine dem Getränkesubstrat, insbesondere dem Kaffeepulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Ein Filterelement mit einer Filzstruktur hat den Vorteil, dass sich keine "Crema" auf einem Kaffee, Espresso oder dergleichen bildet bzw. dass sich auf einem Tee keine Blasen bilden.

Ein eine Trägerstruktur, insbesondere eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Trägerelement aufweisend eine oder mehrere Filzstrukturen umfasst bevorzugt eine Massenbelegung (auch als Grammatur oder Flächengewicht bezeichnet) zwischen 100 und 1500 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter für die Herstellung von Tee aber auch für Kaffee, Espresso und dergleichen und 600 - 700 Gramm pro Quadratmeter für die Herstellung von Kaffee, Espresso oder dergleichen aber auch für Tee. Ganz besonders bevorzugt beträgt die Grammatur 1000 - 1300 Gramm pro Quadratmeter für die Herstellung von Kaffee, Espresso oder dergleichen aber auch für Tee. Das Filterelement bzw. das Vlies weist bevorzugt eine Dicke zwischen 0,4 und 5 Millimetern, besonders bevorzugt zwischen 1,1 und 3,0 Millimetern auf. Ganz besonders bevorzugt, beträgt die Dicke 1,2 - 1,4 Millimeter für die Herstellung von Tee und 2,6 - 3,0 für die Herstellung von Kaffee.

Vorzugsweise ist das Filterelement mehrlagig vorgesehen. Die Lagen können lose aufeinander liegen oder zumindest lokal miteinander verbunden sein. Vorzugsweise werden die Lagen getrennt voneinander gefertigt und dann vorzugsweise miteinander verbunden oder beispielsweise einstückig vorgesehen und dann gefaltet. Vorzugsweise werden die Lagen durch Stoffschluss und insbesondere nur lokal, beispielsweise entlang eines oder mehrerer, insbesondere schmaler Streifen miteinanderverbunden. Eine lediglich lokale Verbindung zwischen zwei Lagen hat den Vorteil, dass sich die Lagen zumindest abschnittsweise zueinander bewegen können. Die Lagen des Filterelements können identisch sein oder sich voneinander unterscheiden. Vorzugsweise ist mindestens eine, besonders bevorzugt jede Lage des Filterelements punkt- und/oder strukturkalandriert. Für den Fall, dass nur eine Lage punkt- und/oder strukturkalandriert ist, ist diese vorzugsweise der Kapselwand oder dem Kapseldeckel zugewandt.

Das Filterelement wird vor seinem Einlegen in die Portionskapsel vorzugsweise aus einem Streifen ausgetrennt, insbesondere ausgestanzt.

Vorzugsweise wird das Filterelement so auf dem Boden der Kapsel angeordnet, dass es möglichst großflächig anliegt. Das Filterelement kann lediglich in die Kapsel eingelegt werden. Besonders bevorzugt wird das Filterelement mit dem Boden verbunden, vorzugsweise stoffschlüssig verbunden, insbesondere an den Boden gesiegelt, insbesondere durch Ultraschall, bevor das Getränkesubstrat in den Kapselkörper eingefüllt wird. Der Stoffschluss erfolgt insbesondere entlang eines Kreisrings. Weiterhin bevorzugt wird das Filterelement vor dessen Befestigung an der Kapsel, insbesondere dem Kapselboden, gespannt, um die Anlage an den Boden zu verbessern.

Beim Öffnen der Kapsel durch ein Perforationsmittel ist es vorteilhaft, wenn dieses das Filterelement teil- und/oder abschnittsweise von dem Kapselboden wegbewegt und dabei spannt oder zusätzlich spannt. Dabei kann das Perforationsmittel in das Filterelement eindringen und/oder durchdringen. Vorzugsweise ist das Filterelement größer bemessen als der Kapselboden, auf dem es aufliegt, so dass das Filterelement beispielsweise etwas am Rand hochsteht.

Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ ist aber ebenso denkbar, dass der Boden der Portionskapsel bereits werksseitig mit einer Auslauföffnung versehen ist, welche vorzugsweise mittels einer Dichtfolie verschlossen ist. Die Dichtfolie ist dann beispielsweise mittels des Perforationsmittels perforierbar oder von Hand vom Kapselboden abziehbar. Das Filterelement überspannt diese Auslauföffnung. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, das an ihr, beim Ausströmen des fertiggestellten Getränkes kein nennenswerter Druckverlust entsteht, insbesondere dass es zu keiner nennenswerten Verwirbelung des fertiggestellten Getränkes kommt, der zu einem Gaseintrag in das Getränk und damit zur Schaumbildung führen könnte. Diese Ausführungsform eignet sich sowohl für die Herstellung von Tee als auch Kaffee, der keine oder nur geringfügig Crema aufweisen soll.

Gemäß einer weiteren bevorzugten Ausführungsform der vorliegenden Erfindung ist vorgesehen, dass das Filterelement elastisch ausgebildet ist und zumindest in seinem Randbereich im Bereich des Kapselbodens angeordnet und/oder befestigt ist. Wenn der Kapselboden von einem äußeren Perforationsmittel durchstochen wird, kann das Filterelement bei einem Kontakt mit dem Perforationsmittel aufgrund seiner Elastizität nachgeben bzw. gedehnt werden. Somit wird die Gefahr ausgeräumt, dass das Filterelement durch das Perforationsmittel zerstört wird und Getränkesubstanz ungefiltert aus der Portionskapsel gespült wird. Eine feste Beabstandung zwischen dem Filterelement und dem Kapselboden, wie sie aus dem Stand der Technik bekannt ist, ist nicht notwendig kann aber vorhanden sein, da dieser Abstand durch das Perforationsmittel automatisch herbeigeführt wird. Auf diese Weise entsteht unterhalb des Filterelements ferner ein Sammelbecken für die durch das Filterelement hindurchtretende Getränkeflüssigkeit.

Vorzugsweise wird das Getränkesubstrat beim Perforieren der Portionskapsel zumindest zeitweise etwas komprimiert.

Gemäß einer weiteren bevorzugten Ausführungsform der vorliegenden Erfindung ist vorgesehen, dass das Filterelement von dem Perforationsmittel gespannt, angestochen und/oder perforiert wird.

Gemäß einer weiteren bevorzugten Ausführungsform der vorliegenden Erfindung ist vorgesehen, dass der Randbereich sich zumindest teilweise entlang eines Seitenwandbereichs des Kapselkörpers erstreckt, wobei sich der Seitenwandbereich zwischen der Einfüllseite und dem Kapselboden erstreckt.

Gemäß einer weiteren bevorzugten Ausführungsform der vorliegenden Erfindung ist vorgesehen, dass das Filterelement den Kapselboden vollständig oder nur teilweise überdeckt.

Gemäß einer weiteren Ausführungsform der vorliegenden Erfindung ist vorgesehen, dass das Filterelement in einem Randbereich des Kapselbodens am Kapselboden befestigt ist und/oder dass das Filterelement in einem Randbereich des Filterelements am Seitenwandbereich befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Einer Perforierung des Filterelements wird somit vorgebeugt und/oder die Perforierung wird vermindert. Insbesondere ist bei dieser Ausführungsform ein Anheben des Filterelements durch das Perforierungsmittel nicht erforderlich. Gleichwohl kann das Filterelement dennoch dazu ausgebildet sein, von dem Perforierungsmittel angehoben zu werden, um eine versehentliche Perforierung in jedem Falle auszuschließen.

Gemäß einer weiteren Ausführungsform der vorliegenden Erfindung ist vorgesehen, dass das Filterelement sich nur in einem Zentralbereich vom Kapselboden abhebt und im Randbereich des Kapselbodens weiter auf dem Kapselboden aufliegt oder am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee-, Instant- und/oder Milchgetränks und andere Getränkezubereitungen.

Bei der Herstellung eines Kakao-, Milch- oder Instantgetränkes weist die Kapsel vorzugsweise kein Filterelement auf.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform der vorliegenden Erfindung
- **Figur 3**: zeigt einen Längsschnitt durch eine in einer geschlossenen Brühkammer liegende Portionskapsel gemäß einer zweiten Ausführungsform der vorliegenden Erfindung.
- **Figuren 4**: zeigt ein punktkalandrietes Vlies
- **Figuren 5a, 5b**: zeigen schematische Schnittbildansichten einer Portionskapsel gemäß einer bevorzugten Ausführungsform der vorliegenden Erfindung.
- **Figur 6**: zeigt eine schematische Schnittbildansicht einer Portionskapsel gemäß einer weiteren bevorzugten Ausführungsform der vorliegenden Erfindung.
- **Figur 7**: zeigt ein Perforationsmittel, das in das Filterelement eindringt.
- **Figur 8**: zeigt ein Perforationsmittel, das das Filterelement durchdringt.
- **Figuren 9a -c**: zeigen unterschiedliche Ausführungsformen des Filterelementes mit Filz, insbesondere Nadelfilz.
- **Figur 10**: zeigt ein Filterelement bestehend aus zwei Lagen
- **Figur 11**: zeigt das Filterelement gemäß Figur 10 beim Aufstechen der Kapsel durch ein Perforationsmittel

In den verschiedenen Figuren sind gleiche Teile stets mit den gleichen Bezugszeichen versehen und werden daher in der Regel auch jeweils nur einmal benannt bzw. erwähnt.

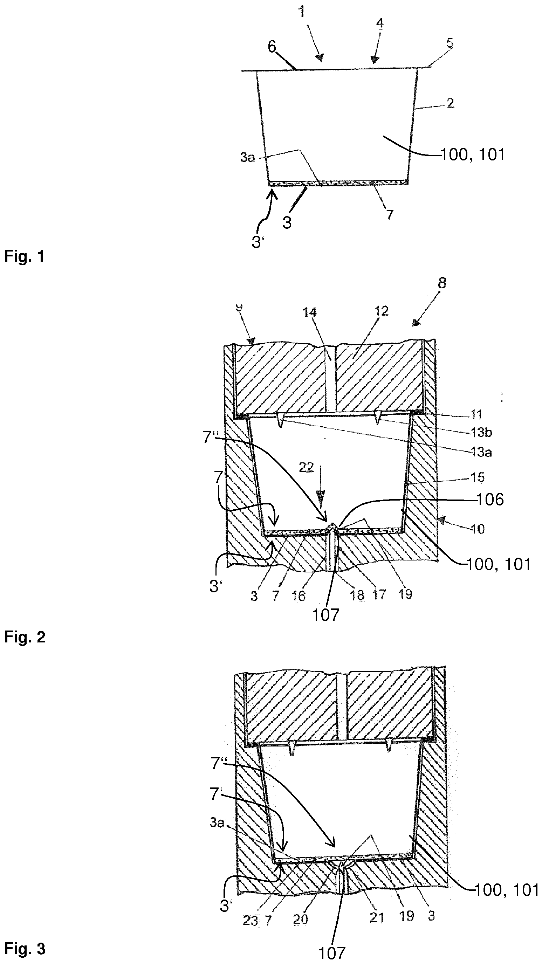

In **Figur 1** ist eine Ausführungsform der erfindungsgemäßen Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulat oder blätterförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Der Tee kann auch als Grob- oder Feinschnitt oder als ganze Blätter oder Früchte oder Fruchtstücke vorliegen. Auf der Innenseite 3a des geschlossenen Kapselkörperbodens 3, d.h. innerhalb des Hohlraums 100, ist ein Filterelement 7, bestehend aus einem Fasermaterial angeordnet. Das Filterelement 7 liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Das Filterelement kann beispielsweise ein Vlies sein und/oder eine Filzstruktur aufweisen. Das Vlies umfasst vorzugsweise ein aus Polyester-Feinfasern hergestellten Vliesstoff. Die Fasern werden besonders bevorzugt mittels eines Kalanders punktförmig thermisch miteinander verbunden. Beispielsweise werden eine Vielzahl von extrudierten Polyesterfasern aufeinander und nebeneinander angeordnet und anschließend mittels beheizten Walzen punkt- und/oder strukturkalandriert. Das Vlies umfasst einen Wirrfaser- und/oder faserorientierten-Vliestoff. Das Vlies umfasst bevorzugt eine Massenbelegung (auch als Grammatur oder Flächengewicht bezeichnet) zwischen 40 und 250 Gramm pro Quadratmeter, besonders bevorzugt zwischen 80 und 140 Gramm pro Quadratmeter, und ganz besonders bevorzugt zwischen 110 und 130 Gramm pro Quadratmeter. Das Filterelement bzw. das Vlies weist bevorzugt eine Dicke zwischen 0,2 und 2 Millimetern, besonders bevorzugt zwischen 0,3 und 0,6 Millimetern, und ganz besonders bevorzugt, von im Wesentlichen 0,32 Millimetern auf. Das Vlies ist derart ausgebildet, dass die Luftdurchlässigkeit des Vlieses bei 100 Pascal bevorzugt zwischen 100 und 3000 l/(m²s), besonders bevorzugt zwischen 1500 und 2500 l/(m²s) und ganz besonders bevorzugt, im Wesentlichen bei 2000 l/(m²s) liegt. Das Vlies ist ferner derart ausgebildet, dass die Höchstzugkraft in Längsrichtung zwischen 100 und 400 Newton pro 5 Zentimeter, vorzugsweise zwischen 200 und 300 Newton pro 5 Zentimeter, besonders bevorzugt im Wesentlichen 220 - 270 Newton pro 5 Zentimeter und in Querrichtung zwischen 50 und 350 Newton pro 5 Zentimeter, vorzugsweise zwischen 100 und 250 Newton pro 5 Zentimeter, besonders bevorzugt im Wesentlichen 120 - 200 Newton pro 5 Zentimeter beträgt, wobei die Höchstzugkraft-Dehnung in Längsrichtung zwischen 20% und 60%, vorzugsweise zwischen 30% und 50%, besonders bevorzugt im Wesentlichen 40 Prozent und in Querrichtung zwischen 30% bis 70%, vorzugsweise zwischen 40% und 60%, besonders bevorzugt im Wesentlichen 50 Prozent umfasst. Trotz dieser sehr guten mechanischen Eigenschaften, weist das Vlies sehr gute Durchflussraten und Filtereigenschaften auf.

In **Figur 2** ist eine Portionskapsel 1 gemäß der in Figur 1 illustrierten Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 dicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche vorzugsweise die Ablaufrillen 17 auf. In der Darstellung ist der Boden 3 der in der Brühkammer 9, 10 befindlichen Portionskapsel 1 von dem Öffnungsdorn 16 des zweiten Brühkammerelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unzerstört bleibt (d.h. beispielsweise vom Öffnungsdorn 16 angestochen aber nicht zerstört wird). Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt.

In **Figur 3** ist eine Portionskapsel 1 gemäß einer zweiten Ausführungsform der vorliegenden Erfindung dargestellt, wobei die zweite Ausführungsform im Wesentlichen der in Figur 2 illustrierten ersten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit auf die Eindringtiefe der Einstechspitze 19 des Öffnungsdornes 16 abgestimmt, so dass das Filterelement 7 vorzugsweise nicht durchstoßen wird. Alternativ liegt das Filterelement 7 über der Ausbuchtung 21 des Kapselbodens 3, die in der Einbuchtung des Brühglockenbodens 23, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

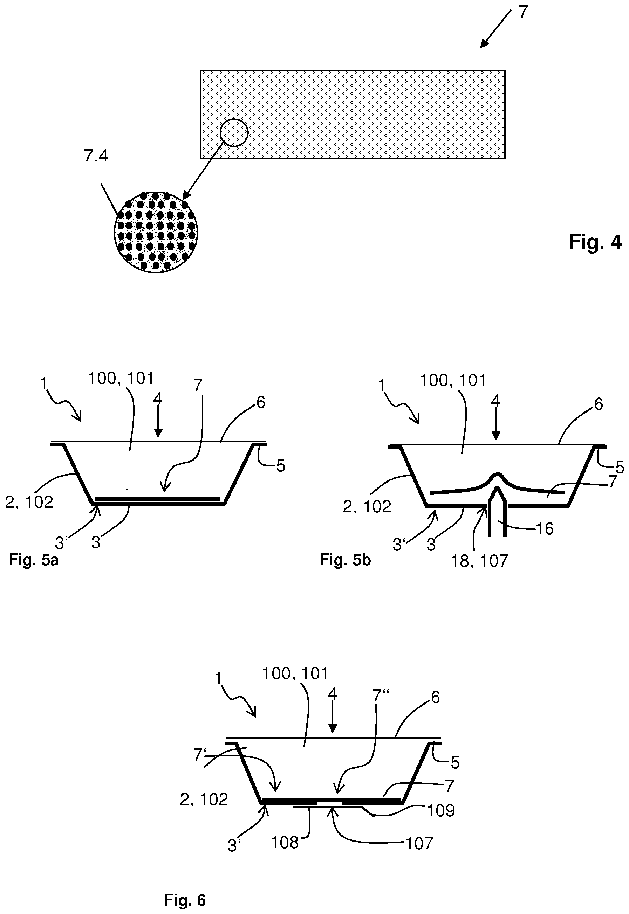

**Figur 4** zeigt das Filterelement 7, das erfindungsgemäß aus einem punktkalandriertes Fasermaterial, beispielsweise aus einem punktkalandrierten Vlies oder einem punktkalandrierten Filz vorgesehen ist. Wie der Figur, insbesondere der Vergrößerung entnommen werden kann, weist das Fasermaterial dadurch eine Struktur mit Einbuchtungen 7.4 auf. Diese Einbuchtungen sind vorzugsweise gemäß einem gleichmäßigen Muster und/oder äquidistant vorgesehen. Zumindest im Bereich der Einbuchtungen sind die ungeordneten Fasern, aus denen das Fasermaterial aufgebaut ist, miteinander verbunden, insbesondere verschweißt. Die Einbuchtung in dem Fasermaterial wird dadurch erzeugt, das es zwischen zwei Walzen hindurchgeführt wird, von denen mindestens eine beheizt ist und mindestens eine, vorzugsweise eine beheizte Walze, Erhebungen aufweist, die das Muster der Einbuchtungen in das Fasermaterial einprägen. Vorzugsweise wird das Fasermaterial zwischen den Walzen verdichtet. Statt der Punkte können zumindest teilweise auch Strukturen in das Material eingeprägt werden. Derartige Strukturen sind beispielsweise Linien, die gerade oder gekrümmt sein können und die parallel und/oder winklig zueinander vorgesehen sind. Andere Beispiele für Strukturen sind Kreise, Ovale, Rechtecke und/oder Quadrate. Diese Strukturen können auf den Walzen vorgesehen sein, so dass sie in regelmäßigen Abständen in dem Material wiederkehren.

In **Figuren 5a und 5b** sind schematische Schnittbildansichten einer Portionskapsel 1 gemäß einer weiteren Ausführungsform der vorliegenden Erfindung dargestellt. Diese Ausführungsform gleicht im Wesentlichen der in Figuren 1 und 2 illustrierten ersten Ausführungsform, wobei das Filterelement 7 elastisch ausgebildet ist. In Figur 5a ist die Portionskapsel 1 in ihrer Ausgangsposition dargestellt, während sie in Figur 5b von dem Perforierungsmittel 16 perforiert dargestellt ist (die Portionskapsel 1 befindet sich in Figur 5b in einer nicht weiter dargestellten Brühkammer 8). Durch die elastische Ausbildung des Filterelements 7 wird das Filterelement 7 in seinem Zentralbereich 7" bei einem mechanischen Kontakt mit dem Perforierungsmittel 16 in Richtung der Einlassseite 4 gedehnt, ohne von dem Perforierungsmittel 16 zerrissen zu werden, wobei eine zumindest teilweise Perforierung des Filterelements möglich ist. Im Randbereich des Kapselbodens 3' bleibt das Filterelement 7' fest bzw. stoffschlüssig mit dem Kapselboden 3 verbunden, so dass keine Getränkesubstanz 101 vom Hohlraum 100 am Filterelement 7 vorbei in Richtung der durch das Perforierungsmittel 16 erzeugten Ausgangsöffnung 107 gelangt. Die Verbindung erfolgt vorzugsweise durch Siegeln, insbesondere mit Ultraschall, besonders bevorzugt entlang eines Kreisrings.

In **Figur 6** ist eine Schnittbildansicht einer Portionskapsel 1 gemäß einer weiteren Ausführungsform der vorliegenden Erfindung dargestellt. Diese Ausführungsform gleicht im Wesentlichen der in Figur 1 dargestellten Ausführungsform, wobei die Portionskapseln 1 der vorliegenden Ausführungsform mit einer permanenten Ausgangsöffnung 107 im Kapselboden 3 ausgestattet ist, welche in der Ausgangslage mit der Folie 108 abgedichtet ist. Die Folie 108 weist dabei vorzugsweise eine Abziehlasche 109 zum Abziehen der Folie 108 von Hand auf. Eine Perforation des Kapselbodens 3 mittels eines äußeren Perforationsmittels 16 ist nicht vorgesehen. Vielmehr wird beim Einlegen der Portionskapsel 1 in die Brühkammer 8 die Folie 108 mittels der Abziehlasche 109 einfach vom Kapselboden 3 abgezogen und der Brühvorgang kann anschließend direkt und ohne Perforierung des Kapselbodens 3 gestartet werden. Es ist jedoch auch möglich, dass die Folie 108 an der Portionskapsel verbleibt und von dem Perforationsmittel durchstochen wird. Das Filterelement überspannt die Ausgangsöffnung 108, die vorzugsweise so groß ist, dass an ihr kein nennenswerter Druckverlust des ausströmenden Getränks entsteht, auch wenn sich das Perforationsmittel in der Öffnung befindet. Der Fachmann versteht, dass die Ausgangsöffnung auch mit einer Folie verschlossen sein kann, die keine Abziehlasche aufweist und/oder die nicht peelfähig mit dem Kapselboden verbunden ist.

Der Fachmann erkennt, dass es möglich ist, dass das Perforationsmittel 16 beim Eindringen in die Kapsel das Filterelement spannt, ansticht und/oder durchsticht, d.h. das Filterelement ist beispielsweise mit dem Boden der Kapsel zumindest abschnittsweise stoffschlüssig verbunden, an dem Boden möglichst großflächig anliegend vorgesehen und/oder gespannt.

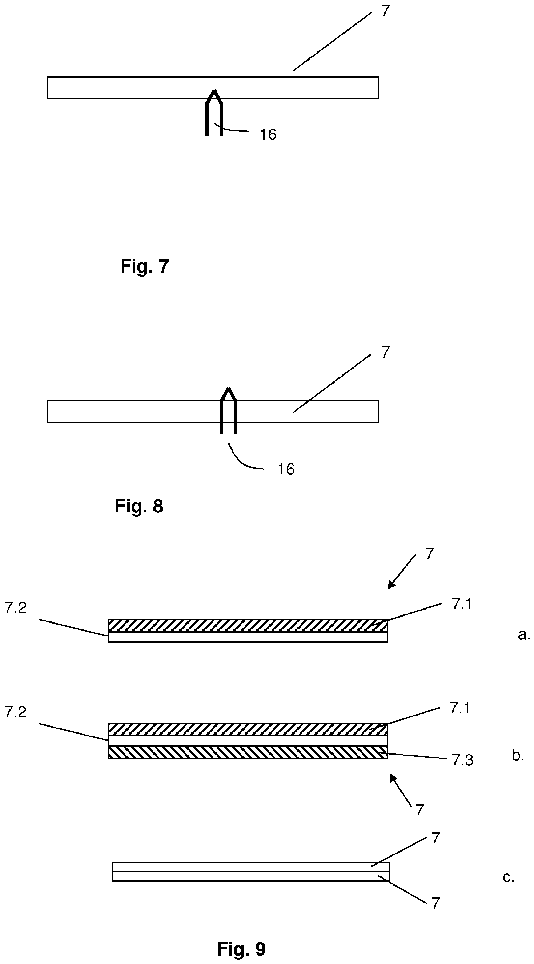

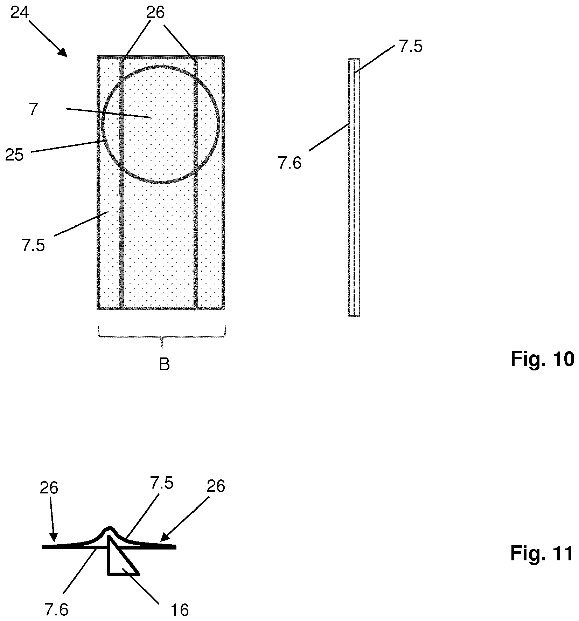

**Figuren 7 und 8** zeigen eine weitere Ausführungsform der vorliegenden Erfindung. In dem vorliegenden Fall ist das Filterelement 7 so ausgeführt, dass das Performationsmittel 16 beim Eindringen in die Kapsel das Filterelement spannt, ansticht (Fig. 10) und/oder durchsticht, d.h. das Filterelement ist beispielsweise mit dem Boden der Kapsel zumindest abschnittsweise stoffschlüssig verbunden, an dem Boden möglichst großflächig anliegend vorgesehen und/oder gespannt.

**Figuren 9** **a - c** zeigen unterschiedliche Ausführungsformen eines Filterelementes 7 mit einer Filzstruktur 7.1, insbesondere Nadelfilzstruktur. Dieses Filterelement 7 weist vorzugsweise eine Trägerstruktur 7.2, beispielsweise eine Gewebestruktur auf. An dieser und/oder in diese Gewebestruktur 7.2 wird auf der gesamten, dem Kaffeepulver oder Tee zugewandten Oberfläche eine Filzstruktur 7.1, angeordnet und beispielsweise durch Nadelfilzen mit dieser verbunden, was in Figur 9a dargestellt ist.
Die Ausführungsform gemäß Figur 9b weist zwei Filzstrukturen 7.1 und 7.3 auf, die jeweils an und/oder in der Trägerstruktur angeordnet sind. Beide Strukturen erstrecken sich vorzugsweise über den gesamten Querschnitt, d.h hier die gesamte kreisförmige Oberfläche, des Filterelementes. Die Filzstrukturen 7.1 und 7.3 können gleich oder unterschiedlich dick sein. Vorzugsweise ist die Filzstruktur 7.1 dünner ausgeführt als die Schicht 7.3 oder umgekehrt. Die Trägerschicht ist dann bezüglich der Mitte, bezogen auf die Dicke, des Filterelementes versetzt vorgesehen sein. Die Strukturen 7.1 und 7.3 können aus unterschiedlichen oder demselben Material(ien) hergestellt sein. Diese betreffen nicht nur die Substanz aus der sie hergestellt sind, sondern auch die Fadendurchmesser und/oder die Fadenlänge aus denen die Filzstrukturen gefertigt werden. Zwischen den beiden Strukturen 7.1 und 7.3 ist eine Trägerstruktur 7.2 vorgesehen, in der sich kein oder nur wenig Filzstruktur befindet und die vorzugsweise Querströmungen zulässt.
Figur 9c zeigt noch eine weitere Ausführungsform eines Filterelementes mit Filzstruktur. In dem vorliegenden Fall sind zwei Filterelemente 7 mit einer Filzstruktur, wie sie beispielsweise gemäß den Figuren 9a und b beschrieben wurden, übereinander angeordnet. Die Filterelemente 7 können lediglich aufeinander liegen oder miteinander verbunden sein. Die Filterelemente 7 können aber auch nur Filz ohne Trägerstruktur aufweisen.

Alle Filterelemente mit einer Filzstruktur haben den Vorteil, dass sie einen geringen Druckverlust aufweisen, bzw. dass der Druckabbau entlang des Filterelementes mit einem geringen Gradienten erfolgt. Dadurch kann beispielsweise Kaffee ohne Crema, d.h. Schaum, oder Tee ohne Schaum hergestellt werden. Die Filterelemente mit einer Filzstruktur werden vorzugsweise lediglich in die Kapsel eingelegt. Vorzugsweise weist das Filterelement mit der Filzstruktur einen größeren Durchmesser auf als der Boden der Kapsel, so dass es sich im Randbereich gegen die Wandung der Kapsel drückt.

Vorzugsweise ist das Filterelement mit Filzstruktur, insbesondere vollständig, aus PET gefertigt.

Mindestens eine der Filzstrukturen 7.1 und/oder 7.3 ist punkt- und/oder strukturkalandriert. Dadurch erhöht sich die Festigkeit des Filterelements 7. Vorzugsweise wird das gesamte Filterelement durch zwei Walzen hindurchgeführt und dabei kalandriert.

Eine bevorzugte Ausführungsform der vorliegenden Erfindung ist in **Figur 10** dargestellt. In diesem Fall weist das Fasermaterial 24 aus dem das Filterelement 7 gefertigt ist zwei Lagen 7.5, 7.6 auf, die vorzugsweise unabhängig voneinander gefertigt und dann entlang der Verbindungsfläche(n) 26 miteinander verbunden werden. Das Fasermaterial kann aber auch einlagig gefertigt und dann geteilt oder gefaltet werden, um mehrere Lagen zu erhalten, die dann miteinander verbunden werden. In dem vorliegen Fall ist jede Verbindungfläche ein, bezogen auf die Breite B des Fasermaterials bzw. des Filterelementes 7 schmaler Streifen, dessen Breite jeweils vorzugsweise weniger als 30%, besonders bevorzugt weniger als 20% noch mehr bevorzugt weniger als 10% und am meiste bevorzugt weniger als 5% der Breite B des Filterelements 7 beträgt. Diese Art bevorzugten Ausführungsformen haben den Vorteil, das die beiden Lagen 7.5, 7.6 des Filterelements 7, das aus dem Fasermaterial ausgeschnitten, insbesondere ausgestanzt wird, zwar miteinander verbunden sind, sich aber dennoch relativ zueinander bewegen können. Alternativ oder zusätzlich können die Lagen auch mit anderen als dem oben beschriebenen Muster miteinander verbunden werden. Beispielsweise können sie durch zwei sich kreuzende Linien, insbesondere Geraden miteinander verbunden werden.

Die Lagen können identisch oder unterschiedlich aufgebaut sein. Dies gilt beispielsweise für das Material, die Größe, Dicke und/oder die Struktur der jeweiligen Schicht. Es ist sogar möglich eine Filz- mit einer Vlieslage zu kombinieren. Es können mehr als zwei Lagen vorhanden sein.

Beispielsweise kann ein Perforierungsmittel 16, das die Kapsel aufsticht, die zweite Lage 7.6 durchstechen und die erste Lage 7.5 von der zweiten Lage 7.6 abheben, was in **Figur 11** dargestellt ist. Es ist aber auch möglich, dass das Perforationsmittel beide Lagen anhebt.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckelfolie
- 7: Filterelement
- 7': Randbereich des Filterelements
- 7": Zentralbereich des Filterelements
- 7.1: Filzstruktur, Nadelfilzstruktur
- 7.2: Trägerstruktur
- 7.3: Filzstruktur, Nadelfilzstruktur
- 7.4: Punktkalandrierung
- 7.5: erste Lage
- 7.6: zweite Lage
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ausbuchtung
- 22: Zubereitungsflüssigkeitsfluss
- 23: Brühglockenboden
- 24: punkt- und/oder strukturkalndriertes Fasermaterial
- 25: Ausstanzring, Ausstanzkontur, Kontur des Filterelementes
- 26: Verbindungsfläche zwischen den Lagen 7.5 und 7.6
- 100: Hohlraum
- 101: Getränkesubstrat
- 102: Seitenwandbereich
- 107: Ausgangsöffnung
- 108: Folie
- 109: Abziehlasche
- B: Breite des Fasermaterials 24, Breite des Filterelementes 7

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist, **dadurch gekennzeichnet, dass** das Filterelement (7) ein punkt- und/oder strukturkalandriertes aus Fasern hergestelltes Material aufweist, wobei die Fasern zumindest an den Oberflächen des Vliesstoffes durch ein Thermokalandrierverfahren punktuell und/oder gemäß einer bestimmten Struktur, beispielsweise mit zwei sich insbesondere kreuzenden Linien, miteinander verbunden, insbesondere verschweißt sind.

2. Portionskapsel nach Anspruch 1, **dadurch gekennzeichnet, dass** das Filterelement ein punkt- und/oder strukturkalandriertes Vlies oder ein punkt- und/oder strukturkalandrierter Filz ist.

3. Portionskapsel (1) nach Anspruch 1 oder 2, **dadurch gekennzeichnet, dass** die Fasern zumindest teilweise Kunststofffasern sind und/oder dass das Filterelement eine Vielzahl von punktförmigen Einbuchtungen aufweist.

4. Portionskapsel (1) nach einem der Ansprüche 2 - 3, **dadurch gekennzeichnet, dass** das Vlies einen aus Polyester-Feinfasern hergestellten Vliesstoff umfasst und/oder dass das Vlies eine Massenbelegung zwischen 40 und 250 Gramm pro Quadratmeter, bevorzugt zwischen 80 und 140 Gramm pro Quadratmeter und besonders bevorzugt 120 Gramm pro Quadratmeter aufweist und/oder dass das Vlies eine Dicke zwischen 0,2 und 2,0 Millimetern, bevorzugt zwischen 0,3 und 0,6 Millimetern und besonders bevorzugt 0,29 - 0,35 Millimetern aufweist und/oder dass das Vlies eine Luftdurchlässigkeit bei einem Druck von 100 Pascal zwischen 100 und 3000 l/(m²s), bevorzugt zwischen 1500 und 2500 (l/m²s) und besonders bevorzugt im Wesentlichen bei 2000 l/(m²s) aufweist.

5. Portionskapsel (1) nach einem der Ansprüche 2 - 3, **dadurch gekennzeichnet, dass** das Filterelement (7) eine punkt- und/oder strukturkalandrierte Filzstruktur (7.1, 7.3), vorzugsweise eine Nadelfilzstruktur (7.1, 7.3), aufweist, die vorzugsweise an oder in einer Trägerstruktur (7.2) vorgesehen ist, wobei das Filterelement (7) vorzugsweise im Bereich des Kapselbodens (3) angeordnet ist.

6. Portionskapsel nach Anspruch 5, **dadurch gekennzeichnet, dass** das Filterelement (7) zwei Filzstrukturen (7.1., 7.3), vorzugsweise Nadelfilzstrukturen, aufweist, die vorzugsweise durch eine Trägerstruktur (7.2) voneinander getrennt sind, von denen mindestens eine punkt- und/oder strukturkalandriert ist.

7. Portionskapsel (1) nach einem der voranstehenden Ansprüche, **dadurch gekennzeichnet, dass** das Filterelement durch Stoffschluss, insbesondere durch Schweißen mit dem Kapselboden verbunden ist.

8. Portionskapsel (1) nach Anspruch 7, **dadurch gekennzeichnet, dass** der Stoffschluss lokal, insbesondere als Kreisring vorgesehen ist.

9. Portionskapsel (1) nach einem der Ansprüche 7 oder 8, **dadurch gekennzeichnet, dass** das Filterelement (7) insbesondere ultraschallgesiegelt und vorzugsweise gespannt ist.

10. Portionskapsel (1) nach einem der vorhergehenden Ansprüche, **dadurch gekennzeichnet, dass**:
- das Filterelement (7) den Kapselboden (3) vollständig oder nur teilweise überdeckt und/oder
- der Kapselboden (3) eine Ausbuchtung (21) in eine der Einfüllseite (4) entgegengesetzte Richtung aufweist.

11. Portionskapsel (1) nach einem der vorhergehenden Ansprüche, **dadurch gekennzeichnet, dass** das Filterelement (7) derart ausgebildet ist, dass bei einer Durchdringung des Kapselbodens (3) durch ein äußeres Perforationsmittel (16) zumindest teilweise ein Abheben des Filterelements (7) vom Kapselboden (3) erfolgt.

12. Portionskapsel (1) nach Anspruch 11, **dadurch gekennzeichnet, dass** das Filterelement (7) sich nur in einem Zentralbereich (7") vom Kapselboden (3) abhebt und im Randbereich (3') des Kapselbodens (3) weiter auf dem Kapselboden (3) aufliegt oder am Kapselboden (3) befestigt ist.

13. Portionskapsel (1) nach einem der vorhergehenden Ansprüche, **dadurch gekennzeichnet, dass**: das Filterelement (7) derart ausgebildet ist und an dem Kapselboden befestigt ist, dass bei einer Durchdringung des Kapselbodens (3) durch ein äußeres Perforationsmittel (16) das Filterelement (7) an- und/oder durchstochen wird.

14. Portionskapsel (1) nach einem der vorhergehenden Ansprüche, **dadurch gekennzeichnet, dass** der Kapselboden (3) eine Ausgangsöffnung (107) aufweist, welche vorzugsweise mit einer Folie (108) abgedichtet ist, wobei die Folie (108) besonders bevorzugt eine Abziehlasche (109) zum Abziehen der Folie von Hand aufweist.

15. Portionskapsel nach Anspruch 14, **dadurch gekennzeichnet, dass** das Filterelement 7 die Ausgangsöffnung (107) überspannt.

## Claims

1. Portion capsule (1) for producing a beverage, having a capsule body (2) with a capsule base (3) and a filling side (4), with a cavity (100) for accommodating a pulverulent or liquid beverage base (101) being formed between the capsule base (3) and the filling side (4), and with a filter element (7) being arranged between the beverage base (101) and the capsule base (3), **characterized in that** the filter element (7) comprises a spot- and/or structure-calendered material which is produced from fibres, wherein the fibres are connected to one another, in particular welded, at least at the surfaces of the non-woven material by a thermal calendering process at points and/or in accordance with a specific structure, for example with two, in particular, intersecting lines.

2. Portion capsule according to Claim 1, **characterized in that** the filter element is a spot- and/or structure-calendered non-woven or a spot- and/or structure-calendered felt.

3. Portion capsule (1) according to Claim 1 or 2, **characterized in that** at least some of the fibres are plastic fibres and/or **in that** the filter element has a large number of spot-like recesses.

4. Portion capsule (1) according to one of Claims 2-3, **characterized in that** the non-woven comprises a non-woven material which is produced from fine polyester fibres, and/or **in that** the non-woven has a mass per unit area of between 40 and 250 grams per square metre, preferably of between 80 and 140 grams per square metre, and particularly preferably 120 grams per square metre, and/or **in that** the non-woven has a thickness of between 0.2 and 2.0 millimetres, preferably of between 0.3 and 0.6 millimetres, and particularly preferably 0.29-0.35 millimetres, and/or **in that** the non-woven has an air permeability of between 100 and 3000 l/(m²s), preferably of between 1500 and 2500 l/(m²s), and particularly preferably substantially of 2000 l/(m²s) at a pressure of 100 pascal.

5. Portion capsule (1) according to one of Claims 2-3, **characterized in that** the filter element (7) comprises a spot- and/or structure-calendered felt structure (7.1, 7.3), preferably a needle felt structure (7.1, 7.3), which is preferably provided on or in a support structure (7.2), with the filter element preferably (7) being arranged in the region of the capsule base (3).

6. Portion capsule according to Claim 5, **characterized in that** the filter element (7) has two felt structures (7.1, 7.3), preferably needle felt structures, which are preferably separated from one another by a support structure (7.2) and of which at least one is spot- and/or structure-calendered.

7. Portion capsule (1) according to one of the preceding claims, **characterized in that** the filter element is connected to the capsule base by cohesive connection, in particular by welding.

8. Portion capsule (1) according to Claim 7, **characterized in that** the cohesive connection is provided locally, in particular in the form of a circular ring.

9. Portion capsule (1) according to either of Claims 7 and 8, **characterized in that** the filter element (7) is, in particular, ultrasonically sealed and preferably stretched.

10. Portion capsule (1) according to one of the preceding claims, **characterized in that**:
- the filter element (7) completely or only partially covers the capsule base (3) and/or the capsule base (3) has a protrusion (21) in a direction opposing the filling side (4).

11. Portion capsule (1) according to one of the preceding claims, **characterized in that** the filter element (7) is formed in such a way that, when the capsule base (3) is penetrated by an external perforation means (16), the filter element (7) is at least partially lifted off from the capsule base (3).

12. Portion capsule (1) according to Claim 11, **characterized in that** the filter element (7) lifts off from the capsule base (3) only in a central region (7") and continues to rest on the capsule base (3) or remains attached to the capsule base (3) in the edge region (3') of the capsule base (3).

13. Portion capsule (1) according to one of the preceding claims, **characterized in that** the filter element (7) is formed and attached to the capsule base in such a way that, when the capsule base (3) is penetrated by an external perforation means (16), the filter element (7) is tapped and/or pierced.

14. Portion capsule (1) according to one of the preceding claims, **characterized in that** the capsule base (3) has an outlet opening (107) which is preferably sealed off by a film or foil (108), with the film or foil (108) particularly preferably having a pull-off tab (109) for pulling off the film or foil by hand.

15. Portion capsule according to Claim 14, **characterized in that** the filter element (7) spans the outlet opening (107).

## Revendications

1. Dosette (1) pour la préparation d'une boisson présentant un corps de dosette (2) avec un fond de dosette (3) et un côté de remplissage (4), dans laquelle une cavité (100) destinée à contenir un substrat de boisson pulvérulent ou liquide (101) est formée entre le fond de dosette (3) et le côté de remplissage (4) et dans laquelle un élément de filtre (7) est disposé entre le substrat de boisson (101) et le fond de dosette (3), **caractérisée en ce que** l'élément de filtre (7) présente un matériau fabriqué en fibres et calandré en points et/ou en structure, dans laquelle les fibres sont assemblées l'une à l'autre, en particulier soudées, au moins sur les surfaces du non-tissé, par un procédé de calandrage à chaud, de façon ponctuelle et/ou selon une structure déterminée, par exemple avec en particulier deux lignes qui se croisent.

2. Dosette selon la revendication 1, **caractérisée en ce que** l'élément de filtre est une toile calandrée en points et/ou en structure ou un feutre calandré en points et/ou en structure.

3. Dosette (1) selon la revendication 1 ou 2, **caractérisée en ce que** les fibres sont au moins en partie des fibres en matière synthétique et/ou **en ce que** l'élément de filtre présente une multiplicité de creux ponctuels.

4. Dosette (1) selon une des revendications 2 ou 3, **caractérisée en ce que** la toile comprend un non-tissé fabriqué en fines fibres de polyester et/ou **en ce que** la toile présente une densité surfacique comprise entre 40 et 250 grammes par mètre carré, de préférence entre 80 et 140 grammes par mètre carré et de préférence encore de 120 grammes par mètre carré et/ou **en ce que** la toile présente une épaisseur comprise entre 0,2 et 2,0 millimètres, de préférence entre 0,3 et 0,6 millimètres et de préférence encore de 0,29 à 0,35 millimètres et/ou **en ce que** la toile présente une perméabilité à l'air sous une pression de 100 pascals comprise entre 100 et 3000 l/(m²s), de préférence entre 1500 et 2500 l/(m²s) et de préférence encore essentiellement d'environ 2000 l/(m²s).

5. Dosette (1) selon une des revendications 2 ou 3, **caractérisée en ce que** l'élément de filtre (7) présente une structure de feutre calandrée en points et/ou en structure (7.1, 7.3), de préférence une structure de feutre aiguilleté (7.1, 7.3), qui est prévue de préférence sur ou dans une structure de support (7.2), dans laquelle l'élément de filtre (7) est disposé de préférence dans la région du fond de dosette (3).

6. Dosette selon la revendication 5, **caractérisée en ce que** l'élément de filtre (7) présente deux structures de feutre (7.1, 7.3), de préférence des structures de feutre aiguilleté, qui sont de préférence séparées l'une de l'autre par une structure de support (7.2), parmi lesquelles au moins une est calandrée en points et/ou en structure.

7. Dosette (1) selon l'une quelconque des revendications précédentes, **caractérisée en ce que** l'élément de filtre est assemblé au fond de dosette par une liaison matérielle, en particulier par soudage.

8. Dosette (1) selon la revendication 7, **caractérisée en ce que** la liaison matérielle est prévue localement, en particulier sous forme d'anneau circulaire.

9. Dosette (1) selon une des revendications 7 ou 8, **caractérisée en ce que** l'élément de filtre (7) est en particulier soudé par ultrasons et de préférence serré.

10. Dosette (1) selon l'une quelconque des revendications précédentes, **caractérisée en ce que**:
- l'élément de filtre (7) recouvre entièrement ou seulement en partie le fond de dosette (3) et/ou
- le fond de dosette (3) présente un renflement (21) dans une direction opposée au côté de remplissage (4).

11. Dosette (1) selon l'une quelconque des revendications précédentes, **caractérisée en ce que** l'élément de filtre (7) est configuré de telle manière que lors d'un percement du fond de dosette (3) par un moyen de perforation extérieur (16) il se produise au moins partiellement un soulèvement de l'élément de filtre (7) du fond de dosette (3).

12. Dosette (1) selon la revendication 11, **caractérisée en ce que** l'élément de filtre (7) ne se soulève du fond de dosette (3) que dans une région centrale (7") et est en plus appliqué sur le fond de dosette (3) ou est fixé au fond de dosette (3) dans la région du bord (3') du fond de dosette (3).

13. Dosette (1) selon l'une quelconque des revendications précédentes, **caractérisée en ce que** l'élément de filtre (7) est configuré et est fixé au fond de dosette de telle manière que lors d'un percement du fond de dosette (3) par un moyen de perforation extérieur (16) l'élément de filtre (7) soit piqué et/ou percé.

14. Dosette (1) selon l'une quelconque des revendications précédentes, **caractérisée en ce que** le fond de dosette (3) présente une ouverture de sortie (107), qui est de préférence obturée avec une feuille (108), dans laquelle la feuille (108) présente de préférence encore un onglet d'enlèvement (109) pour enlever la feuille à la main.

15. Dosette selon la revendication 14, **caractérisée en ce que** l'élément de filtre (7) recouvre l'ouverture de sortie (107).
